# EUROPEAN PATENT SPECIFICATION

(11) **EP 2 348 241 B1**
(45) Date of publication and mention of the grant of the patent: **11.09.2013**
(21) Application number: 11000379.5
(22) Date of filing: 19.01.2011
(51) Int. Cl.: F16L 33/00

(54) **Tube applicator**
Rohrapplikator
Applicateur de tube

(30) Priority: 22.01.2010 GB 201001100; 28.05.2010 GB 201009050
(43) Date of publication of application: 27.07.2011
(73) Proprietor: Bio Pure Technology Limited, Parkland Business Park Denmead Hampshire PO7 6BZ (GB)
(72) Inventor: Maunder, Roy Peter, Lovedean, Hampshire, PO8 9SS (GB)
(74) Representative: Brooks, Nigel Samuel

(56) References cited:
- EP-A2- 0 243 673
- FR-A1- 2 692 291
- GB-A- 465 451
- US-A- 4 945 621
- US-A1- 2007 209 204
- US-B1- 7 322 085

## Description

The present invention relates to apparatus for connecting a flexible tube to a spigot, barb, or the like.

In the food, medical and pharmaceutical industries single use apparatus, or bio-disposable systems, can be used in the preparation of batches of product. Such single use apparatus includes flexible tubing, typically made from silicone, but may be made from other plastics materials, such as thermoplastics. Connections to other pieces of apparatus are commonly made with flanged connectors clamped to each other. The connectors have hollow spigots to which a tube is connected in a fluid tight manner. Connections to other pieces of apparatus can also made using hollow spigots. These spigots are generally provided with barbed ends to retain the tubes.

It is important that this connection between the flexible tube and hollow spigot is fluid tight as fluid leaking between this connection would be lost to the process and when using valuable fluids any loss can be significant. It is particularly important that the connection is stable for the lifetime of the apparatus, because if the connection were to fail, the whole batch may be lost. To prevent disconnection and leaks, the connection is very tight, with the profile of the barb extending slightly beyond the normal diameter of the tube causing slight stretching of the tube around the barb, and therefore making disconnection of the tube from the spigot unlikely to occur. However, this of course makes connecting the tube to the spigot also difficult.

To aid connection, a lubricant, such as alcohol or oil, can be used. However, this can ease both the connection between the tube and the spigot and the disconnection. In addition, the lubricant can seep into the apparatus and contaminate the reaction chemicals and solvents, and the products. Thus it is preferable to avoid the use of such lubricants.

Apparatus has been developed to insert a spigot into a flexible tube, however, these typically incorporate the use of fingers inside the flexible tube to pull the tube open so the spigot can be inserted. While this certainly aids insertion of the spigot into the tube, the use of fingers adds potential contamination into the apparatus and risks damage to both the tube and the spigot. In addition, various types of plastic tubing, in particular thermoplastic tubing, does not return fully to shape once stretched. Thus the use of this type of apparatus to pull the tube open can lead to a permanently enlarged tube and thus a poor connection.

US4945621, in the name of Sugiyama, which discloses the preamble of claim 1, teaches a device for inserting a corrugated connector into a resin tube. The device includes a pair of jaws for holding a tube, the jaws being mounted on a resilient member formed of rubber or resin. Thus the jaws can be displaced transversely as the corrugated connector is inserted into the tube. The specification teaches that each of the jaws must be provided with a substantially semi-circular groove for holding the tube. These must be semi-circular along their entire length, to hold the tube firmly to ensure insertion of the corrugated connector. This is satisfactory for connectors that are corrugated, having a series of small barbs, however for connectors with a single barb, this is not satisfactory.

EP0243673, also published as US4839954, in the name of Siemens, teaches another device for inserting a water or air fitting onto a water or air hose. This teaches a device including a gripper for holding the hose, having a back section having a groove sized to hold the hose, and a front section, having a groove diameter larger than the hose to prevent an excursion of the hose and accommodate the fitting. Two resilient jaws are provided around the outside of the grippers for centring of the hose. This device does not provide support for the hose as the fitting is inserted therein. This can be successful on fittings having small and/or shallow barbs, but on connectors with significant barbs, such as are used in the biotechnology industry, this device is not successful.

The object of the present invention is to provide improved apparatus for inserting a spigot into a flexible tube.

According to the invention there is provided apparatus for inserting a spigot into a flexible tube, the apparatus including
- means for supporting and advancing a spigot and
- means for gripping a flexible tube, while the spigot is inserted therein,
- the gripping means including a pair of jaws for gripping and releasing the tube, with sufficient strength to hold the tube but not crush the same,
- at least part of one or both jaws being moveably mounted against a resistance such that under the force of the advancing spigot at least part of one or both jaws can release sufficiently to allow the spigot to pass into the tube, while retaining the tube in the apparatus
characterised in that the jaws are tapered at their front edges to ease insertion of the spigot.

Typically the jaws are provided with fine grooves or ridges to aid grip on the flexible tube. Preferably the jaws are contoured in accordance with the shape of the spigot.

To position and remove a tube, the jaws will preferably be mounted on runners. A cam rotated by a lever may be provided to move the jaws along the runners to open and close the same. In addition, in the absence of cam movement at least part of the jaws are mounted again spring force, enabling them to be moved against the spring to open and close under the force of the advancing spigot.

Advantageously, a front section of the jaws, typically a tapered section, may moveable against a resistance, with a back section of the jaws, generally not tapered, holding the tube in a fixed position while the jaws are closed.

The movement of the jaws, for positioning to hold the flexible tube can be provided manually, mechanically, electrically or pneumatically, the device being operated manually or electronically.

Typically the whole apparatus will be steralizable, generally in an autoclave.

Advantageously the jaws can be removable to enable jaws contoured for different shapes of spigot to be easily inserted. In addition, it is possible to adjust the stroke of the supporting means.

To help understanding of the invention, a specific embodiment thereof will now be described by way of example and with reference to the accompanying drawings, in which:
Figure 1 is a perspective view of a tube applicator according to the invention;
Figure 2 is a front view of the jaws of the tube applicator of Figure 1;
Figure 3 is a top view of the jaws of the tube applicator of Figure 1;
Figure 4 is a top view of a spigot being connected to a tube using the applicator of Figure 1;
Figure 5 is a top view of the connection of Figure 4 at a more advanced stage; and
Figure 6 is a front view of the jaws of a tube applicator according to a second aspect of the invention;
Figure 7 is a top view of the apparatus according to a third embodiment of the invention;
Figure 8 is a perspective view of on e of a pair of jaws from the embodiment of Figure 7
Figure 9 is a sectional view of the j aw of Figure 8;
Figure 10 is a top view of the apparatus of Figure 7 with a spigot positioned on the support and a tube positioned between the jaws;
Figure 11 is a top view of the apparatus of Figure 7 with the spigot advanced slightly with respect to Figure 10; and
Figure 12 is a top view of the apparatus of Figure 7 with the spigot advanced further with respect to Figure 11.

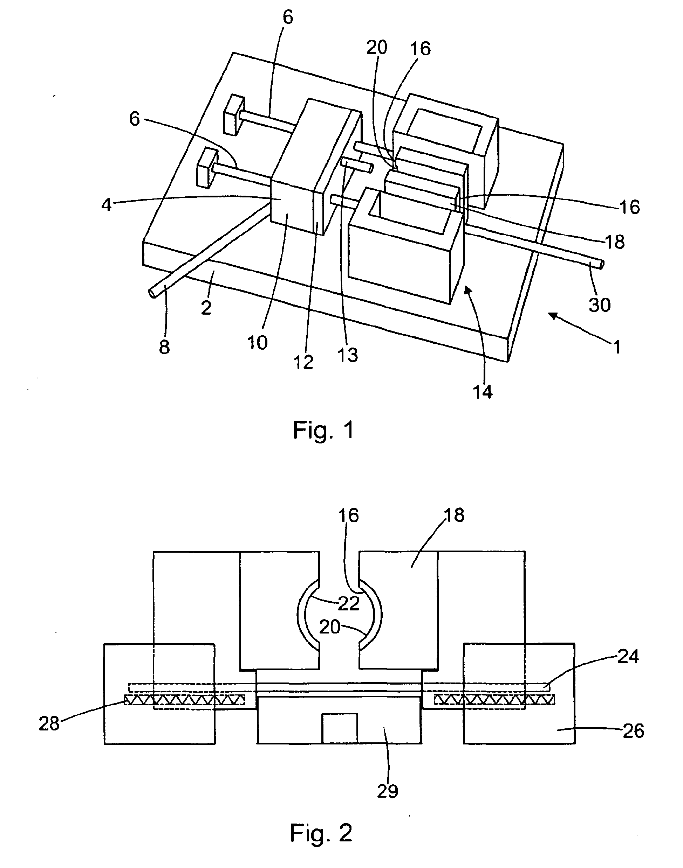

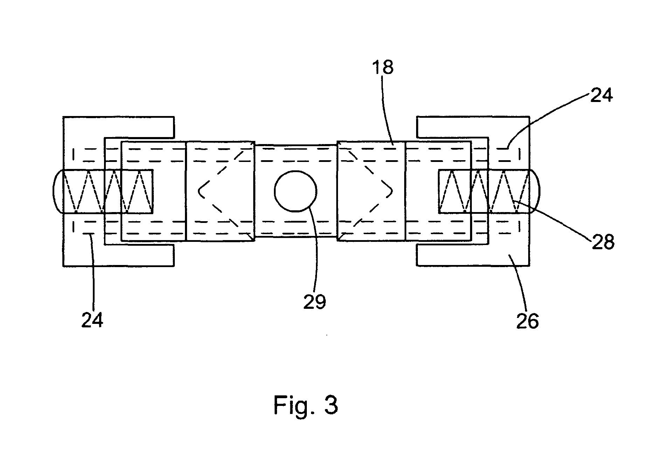

Referring to Figures 1 to 5, the apparatus 1 includes a base 2 on which is mounted a support 4 for a connector C having a spigot S. The spigot, as shown, has a barbed end B. While barbed end spigots are the most commonly used, the device could be used with a spigot with a parallel end. As shown this connector may be a flanged connector but may also be a T-connector, a Y-connector, adaptors, or any other type of device to which a flexible tube is connected over a spigot, including filters and the like.

The support 4 is mounted on a pair of runners 6 to allow it to be advanced forward and retreated backwards along the base 2. Advancement and retraction is achieved by means of a lever 8, although any other type of mechanical, electrical or pneumatic system could be used. The support 4 includes a block 10, mounted on runners to be moved by lever action, and an attachment 12, removably connected to the block, designed to support the chosen connector. As shown the attachment 12 is for a flanged connector C, and comprises a rod 13 onto which the flanged connector is placed, the flange being supported against the support 4. However, other attachments can be used to support different connectors. The attachment 12 also allows for variations in the size of the connector to still be connected to the flexible tube. The movement along the runners can be set to adjust the stroke of the forward motion of the support, which will depend upon the shape and length of the spigot.

In addition, the base also carries a grip 14 for the flexible tube T. The grip 14 includes a pair of jaws 16. These are supported on a pair of carriers 18 and the jaws 16 can be changed in accordance with the diameter of the tube and/or the size and profile of the spigot to be inserted. When positioned on the carriers 18, the jaws 16 face the support 4 and attachment 12, and are aligned such that a tube held in the jaws 16 will be directly facing the spigot S of a flanged connector C held on the attachment 12.

The jaws 16 are slightly flared 20, that is to say tapered, at the end facing the attachment 12, and are provided with a series of grooves 22 to enhance the grip to the flexible tube. While the jaws are shown with grooves, ridges other forms of texture could additionally or alternatively be provided. In addition, the jaws are also contoured in accordance with the shape of the spigot, and in particular the shape and diameter of the barb on the spigot. While a generally flared pair of jaws will be satisfactory for a wide range of shapes of barbed spigot, in the preferred embodiment, the jaws are further contoured in accordance with the specific contour of the barb to be inserted into the tube.

The carriers 18 are held on a pair of runners 24, secured to side supports 26, mounted on the base 2. Between the carriers 18 and the supports 26 are provided a pair of springs 28. These act to urge the carriers 18 into position on the runners. The carriers are also acted on by a cam 29 secured to the based underneath the runners. The cam 29 is rotated using a lever 30, and the shape of the cam 26 moves the carriers 18 between an open position, at which the flexible tube T can be inserted between the jaws, and removed, and a closed position in which the flexible tube is griped between the jaws. The jaws 16 grip the flexible tube T will sufficient force to hold it in position, but not crush it. However, on insertion of the spigot S into the flexible tube T, the jaws are able to move against the action of the springs, forcing them to open slightly to accommodate the barbed end section, while still maintaining a holding force on the tube.

The design of the jaws maintaining a holding force of the tube, while allowing expansion of the tube to accommodate the spigot as it is inserted therein, enables the apparatus to be effective. Where a barbed spigot is used, a slight expansion of the tube is required to accommodate this, which would not be possible with fixed jaws. Thus the resistive element in the jaws enables the expansion of the tube under force from the incoming barbed spigot, while still maintaining a holding force on the jaws. It is the design of the jaws to hold the flexible tube but to move sufficiently under force of the insertion of the spigot, which allows the apparatus to function.

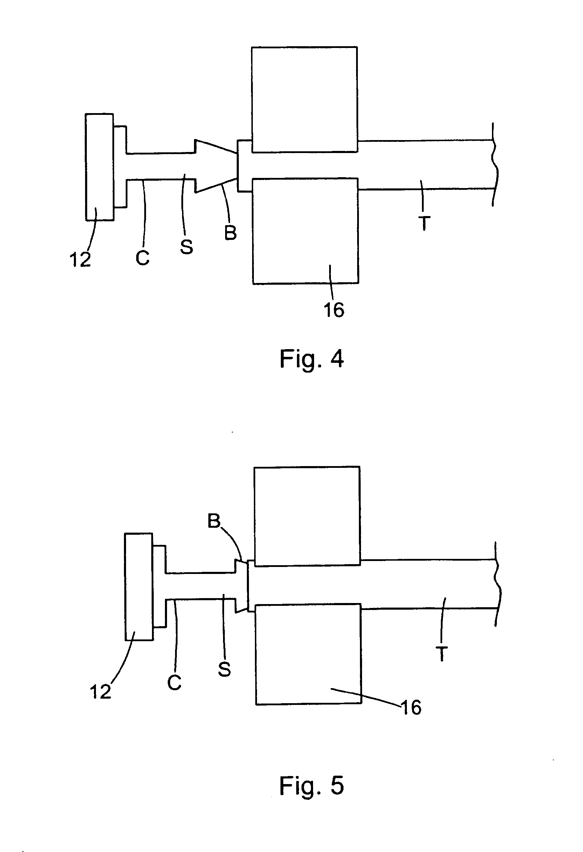

Referring now to Figure 4 and 5, in use a connector C having a spigot S is placed on the support 4. The jaws 16 are opened, a length of flexible tube T is positioned between the jaws and the jaws are closed to securely hold the tube but not to crush the same. The tube T is positioned so that its end is just touching the end of spigot S, as shown in Figure 4. In practice the best way of achieving this contact is for an operator to push the end of the spigot into the end of the tube. This initial connection can be achieved easily, in contrast to the full connection over the barbed spigot. The tube and spigot combination can then be fitted onto the apparatus. The lever 8 is then moved to advance the spigot into the flexible tube. As the spigot advances, the pressure of the advance moves the jaws 16 very slightly towards the supports 26, increasing the distance therebetween to allow the spigot to be inserted into the tube. As can be seen in Figure 5, the jaws are slightly further apart than in Figure 4 to allow for the insertion of the spigot. However, the jaws still maintain a holding force on the tube preventing any significant backwards movement of the same away from the spigot. Once the spigot has been inserted to the correct depth, the lever 8 can be released. This draws the support 4 away from the jaws 16, leaving the spigot in the tube, in the jaws. The lever 30 can then be used to open the jaws and remove the spigot S now fitted to the tube T.

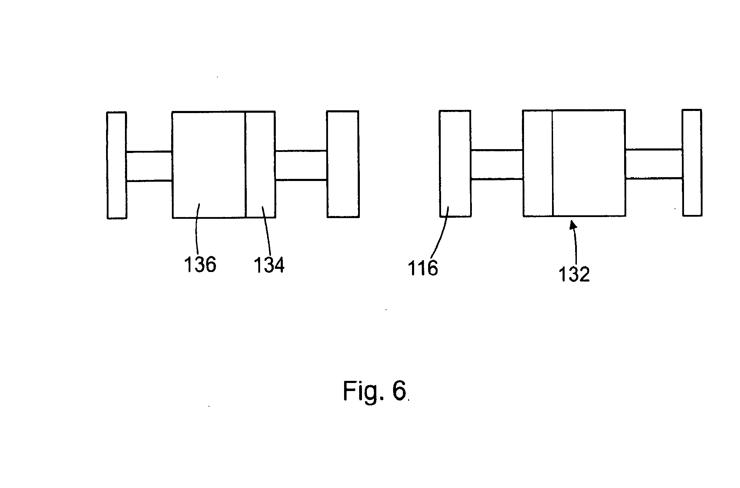

Turning now to Figure 6, the embodiment thereshown is essentially identical to that shown in Figure 1, with the exception that the movement of the jaws 116 is controlled by pneumatic cylinders 132. The jaws 116 are mounted between two pairs of cylinders, 134, 136 that control their movement. The first pair of cylinders, 134 act in the same way as the cam in the first embodiment, i.e. to move the jaws from an open position in which the flexible tube can be inserted and removed, and a closed position in which the flexible tube is griped securely but not crushed. The second pair 136 of cylinders acts in the same way as the springs in the first embodiment, namely to allow a small degree of opening of the jaws to accommodate the spigot as inserted into the tube, by means of check valves. The movement is controlled by a microprocessor (not shown). Alternatively, a single pair of cylinders can act both for the movement of the jaws between an open and closed position, and to allow a slight opening in the jaws to accommodate the entry of the spigot into the tube.

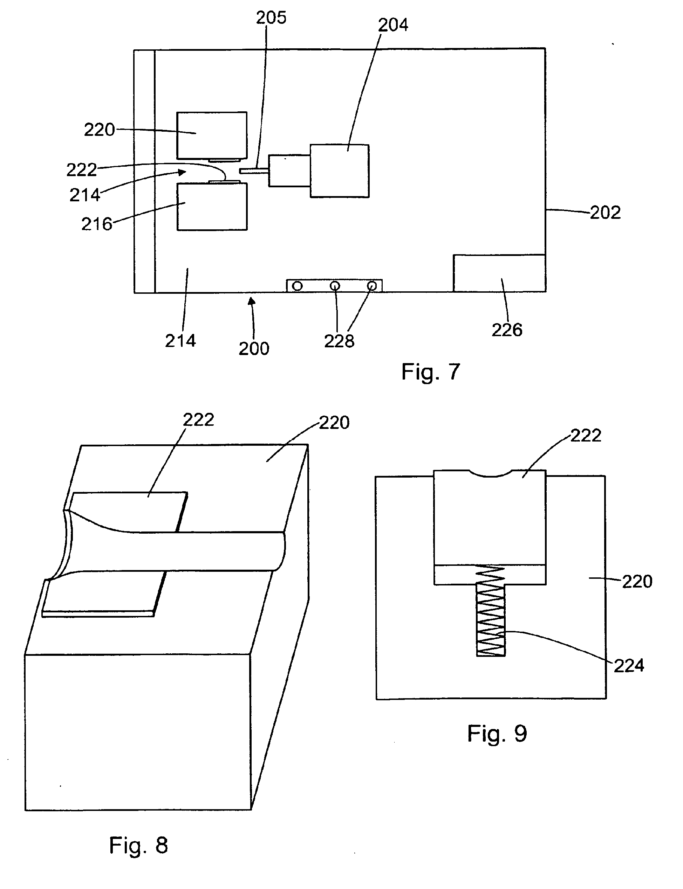

Referring now to Figures 7 to 9, which show apparatus for inserting a spigot into a tube according to a third aspect of the invention. Similarly to the previous embodiments, the apparatus 200 includes a base 202 for supporting the apparatus. Provided on the base is a support 204 for holding a connector having a spigot S. The support 204 is readily changeable on the apparatus and each support will be designed to securely hold a different type or size of connector. As shown the connector is a flanged connector, but may also be a T-or Y-connector, and adapter, or any other device to which flexible tube is connected, including for example a filter. The support 204 shown is designed for use with a flanged connector and is provided with an elongated nose 205. The nose 205 is sized for entry into the flexible tube, to act as a guide to ensure that the spigot S is correctly inserted into the tube T. This removes the necessity of pre-connection of the end of the spigot S into the flexible tube T before operation of device to force the spigot fully into the tube, as described in reference to the first embodiment. The support 204 is mounted on the base for movement under piston control (not shown).

Also provided on the base, again similar to the previous embodiment, is a grip 214 for a flexible tube T. The grip includes a pair of jaws 216, which are mounted for movement under piston control.

The jaws 216 comprise a main element 220 and a compressible front section, 222. The front section 222 fits into the main element 220 with a spring 224 positioned between the two, enabling movement of the front section relative to the main section. Both sections are provided with an indentation to accommodate the flexible tube T, with the front section having a flared portion at the front to accommodate the barb of the spigot. The whole of the jaw is easily replaceable to accommodate different sizes of tube and spigot, with the front section being further replaceable to accommodate the profile of the spigot. The front section 222 will generally be very slightly longer than the spigot to be inserted into the tube and profiled accordingly. The jaws and particularly the indented sections will be provided with small ridges and/or indentations to increase the grip onto the tube.

Typically the jaws will be made out of plastics material, however they could also be made out of metal, wood or any other suitable material. However, the compressive section 222 of the jaws will generally be made out of a metal, for example stainless steel. This is because it has been found that the slight movement of the tube within the jaws, on insertion of the spigot, has a tendency to polish the jaws, which can lead to a reduction or even loss of grip and less satisfactory working of the device. As metal is generally harder than plastics material, it is more resistant to the polishing. For devices that will experience a heavy use, it has been found that metal jaws are significantly more durable that plastics jaws. It has also been found that polishing is experienced on the compressible jaw only as this is where movement occurs. Thus the fixed jaw will typically be made of plastics material.

The jaws are designed to be easily replaceable, with the jaws 216 comprising contoured projections, which mate with contoured indentations in the grips 214. Thus the jaws can be replaced to suit different contours spigot, and different sized of flexible tube and spigot.

The base also holds a microprocessor 226 for controlling the movement of both the jaws 116 and the connector support 204. Buttons 228 will be provided connected to the microprocessor for controlling movement of these elements.

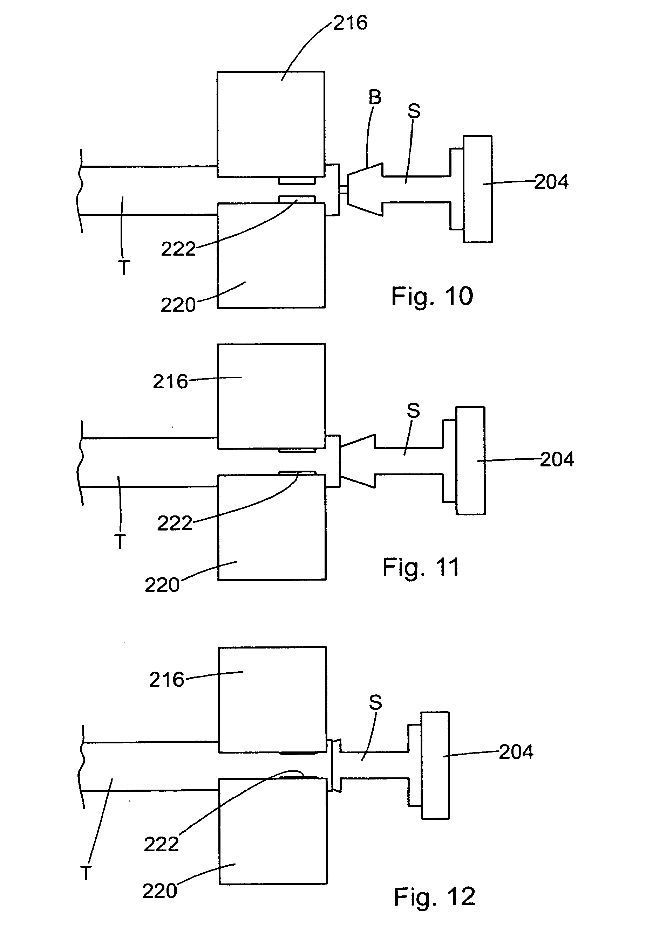

Referring now to Figures 10-12, in use, initially the support 204 is retracted and jaws 216 are opened. A spigot S is positioned on the support 204 and a flexible tube of the corresponding size is placed between the jaws, which are then closed. In this position, the nose 205 of the support is just inside the end of the flexible tube T, as shown in Figure 10. The support then advances, with the nose 205 of the support extending inside the tube T and guiding the spigot therein. Figure 11 shows the spigot just starting to enter the tube. As the spigot is forced into the tube T, the front section 222 of the jaws 216 retracts into the main section of the jaws 220, to allow for the increasing width of the spigot. The main section of the jaws 220 holding firmly to the tube. Figure 12 shown the spigot a significant way into the tube, with the front section of the jaws retracted to allow for the entry of the barb. Once the spigot has been pushed into the tube, the jaws are opened and the spigot and tube removed.

The invention is not intended to be restricted to the details of the above-described embodiment but is defined by the appended claims. For instance, any combination of pneumatic or other powered control can be used in combination with manual operation for the different elements of movement required in the device.

## Claims

1. Apparatus for inserting a spigot (S) into a flexible tube (T), the apparatus including
• means for supporting and advancing (4) a spigot and
• means for gripping (14) a flexible tube, while the spigot is inserted therein,
• the gripping means including a pair of jaws (16) for gripping and releasing the tube, with sufficient strength to hold the tube but not crush the same,
• at least part of one or both jaws being moveably mounted against a resistance (28) such that under the force of the advancing spigot at least part of one or both jaws can release sufficiently to allow the spigot to pass into the tube, while retaining the tube in the apparatus
**characterised in that** the jaws are tapered (20) at their front edges facing the said means for supporting and advancing (4) the spigot so as to ease insertion of the spigot.

2. Apparatus as claimed in claim 1, wherein the jaws with the provided with fine grooves (22) or ridges to aid grip on the flexible tube.

3. Apparatus as claimed in claim 1, or claim 2, wherein the jaws are contoured in accordance with the shape of the spigot.

4. Apparatus as claims in claim 1, claim 2 or claim 3, wherein the jaws are mounted on runners (24).

5. Apparatus as claimed in claim 4, further including a cam (29) to control the opening and closing of the jaws.

6. Apparatus as claimed in any preceding claim, wherein a front section (222) of the jaws, are moveable against the resistance, with a back section (220) of the jaws, not moveable against the resistance.

7. Apparatus as claimed in claim 6, wherein the resistance (28) is a spring.

8. Apparatus as claimed in claim any preceding claim, wherein the movement of the jaws, for positioning to hold the flexible tube is provided manually, mechanically, electrically or pneumatically, the device being operated manually or electronically.

9. Apparatus as claimed in any preceding claim, wherein the jaws are made of hard plastics material.

10. Apparatus as claimed in any preceding claim, wherein at least part of the jaws are made of a metal.

11. Apparatus as claimed in any preceding claim, wherein the whole apparatus is steralizable.

12. Apparatus as claimed in any preceding claim, wherein the jaws are removable to enable jaws contoured for different shapes of spigot to be easily inserted.

## Patentansprüche

1. Vorrichtung zum Einführen eines Einsteckendes (S) in ein flexibles Rohr (T), wobei die Vorrichtung aufweist:
• Mittel zum Halten und Vorwärtsbewegen (4) eines Einsteckendes und
• Mittel zum Festhalten eines flexiblen Rohrs, während das Einsteckende in dieses eingeführt wird,
• wobei die Festhaltemittel ein Paar Einsteckbacken (16) zum Einspannen und Freigeben des Rohrs aufweisen, mit ausreichender Spannkraft, um das Rohr zu halten, aber es nicht zu zerdrücken,
• wobei wenigstens ein Teil einer oder beider Einspannbacken gegen einen Widerstand (28) beweglich so angeordnet ist, dass unter der Kraft des sich vorwärtsbewegenden Einsteckendes sich wenigstens ein Teil einer oder beider Einspannbacken ausreichend lösen kann, um dem Einsteckende das Einführen in das Rohr zu ermöglichen, während das Rohr in der Vorrichtung gehaltert bleibt,
**dadurch gekennzeichnet, dass** die Einspannbacken an ihren vorderen Rändern hin zu den Mitteln zum Halten und Vorwärtsbewegen (4) des Einsteckendes angeschrägt (20) sind, um ein Einführen des Einsteckendes zu erleichtern.

2. Vorrichtung nach Anspruch 1, **dadurch gekennzeichnet, dass** die Einspannbacken mit feinen Nuten (22) oder Rippen versehen sind, um ein Halten des flexiblen Rohrs zu unterstützen.

3. Vorrichtung nach Anspruch 1 oder Anspruch 2, **dadurch gekennzeichnet, dass** die Einspannbacken in ihrer Kontur an die Form des Einsteckendes angepasst sind.

4. Vorrichtung nach Anspruch 1, Anspruch 2 oder Anspruch 3, **dadurch gekennzeichnet, dass** die Einspannbacken an Führungen (24) angeordnet sind.

5. Vorrichtung nach Anspruch 4, **gekennzeichnet durch** ein Betätigungselement (29) zum Steuern/Regeln des Öffnens und Schließens der Einspannbacken.

6. Vorrichtung nach einem der vorstehenden Ansprüche, **dadurch gekennzeichnet, dass** ein vorderer Abschnitt (222) der Einspannbacken gegen den Widerstand beweglich ist, während ein rückwärtiger Abschnitt (220) der Einspannbacken nicht gegen den Widerstand beweglich ist.

7. Vorrichtung nach Anspruch 6, **dadurch gekennzeichnet, dass** der Widerstand (28) eine Feder ist.

8. Vorrichtung nach einem der vorstehenden Ansprüche, **dadurch gekennzeichnet, dass** die Bewegung der Einspannbacken zum Halten des flexiblen Rohrs manuell, mechanisch, elektrisch oder pneumatisch erfolgt, wobei die Vorrichtung manuell oder elektronisch betätigt wird.

9. Vorrichtung nach einem der vorstehenden Ansprüche, **dadurch gekennzeichnet, dass** die Spannbacken aus einem harten Kunststoffmaterial bestehen.

10. Vorrichtung nach einem der vorstehenden Ansprüche, **dadurch gekennzeichnet, dass** zumindest ein Teil der Spannbacken aus Metall besteht.

11. Vorrichtung nach einem der vorstehenden Ansprüche, **dadurch gekennzeichnet, dass** die gesamte Vorrichtung sterilisierbar ist.

12. Vorrichtung nach einem der vorstehenden Ansprüche, **dadurch gekennzeichnet, dass** die Spannbacken entfernbar sind, um einen Einbau von an verschiedene Formen von Einsteckenden angepassten Spannbacken zu ermöglichen.

## Revendications

1. Dispositif pour insérer un embout mâle (S) dans un tube flexible (T), le dispositif comprenant :
· des moyens pour supporter et faire avancer (4) un embout mâle et
· des moyens pour saisir (14) un tube flexible, pendant que l'embout mâle est inséré dans celui-ci,
**·** les moyens de saisie comprenant une paire de mâchoires (16) pour saisir et libérer le tube, avec une force suffisante pour tenir le tube mais ne pas l'écraser,
**·** au moins une partie de l'une ou des deux mâchoires étant montée de façon mobile à l'encontre d'une résistance (28) telle que sous la force de l'embout mâle qui avance au moins une partie de l'une ou des deux mâchoires puisse se libérer suffisamment pour permettre à l'embout mâle de passer jusque dans le tube, tout en retenant le tube dans le dispositif,
**caractérisé en ce que** les mâchoires sont évasées (20) à leurs bords frontaux faisant face auxdits moyens pour supporter et faire avancer (4) l'embout mâle de manière à faciliter l'insertion de l'embout mâle.

2. Dispositif selon la revendication 1, dans lequel les mâchoires sont pourvues de cannelures ou gorges (22) fines pour faciliter la saisie sur le tube flexible.

3. Dispositif selon la revendication 1 ou la revendication 2, dans lequel les mâchoires sont profilées en fonction de la forme de l'embout mâle.

4. Dispositif selon la revendication 1, la revendication 2 ou la revendication 3, dans lequel les mâchoires sont montées sur des rails (24).

5. Dispositif selon la revendication 4, comprenant en outre une came (29) pour contrôler l'ouverture et la fermeture des mâchoires.

6. Dispositif selon l'une des revendications précédentes, dans lequel une section frontale (222) des mâchoires est mobile à l'encontre de la résistance, avec une section dorsale (220) des mâchoires qui n'est pas mobile à l'encontre de la résistance.

7. Dispositif selon la revendication 6, dans lequel la résistance (28) est un ressort.

8. Dispositif selon l'une des revendications précédentes, dans lequel le déplacement des mâchoires, pour qu'elles se positionnent afin de maintenir le tube flexible, est obtenu manuellement, mécaniquement, électriquement ou pneumatiquement, le dispositif étant actionné manuellement ou électroniquement.

9. Dispositif selon l'une des revendications précédentes, dans lequel les mâchoires sont réalisées en matière plastique dure.

10. Dispositif selon l'une des revendications précédentes, dans lequel au moins une partie des mâchoires est réalisée en un métal.

11. Dispositif selon l'une des revendications précédentes, dans lequel la totalité du dispositif est stérilisable.

12. Dispositif selon l'une des revendications précédentes, dans lequel les mâchoires sont amovibles pour permettre l'insertion aisée de mâchoires profilées pour différentes formes d'embout mâle.
